# EUROPEAN PATENT SPECIFICATION

(11) **EP 1 836 042 B1**
(45) Date of publication and mention of the grant of the patent: **03.11.2010**
(21) Application number: 05815583.9
(22) Date of filing: 13.12.2005
(51) Int. Cl.: B29C 65/34, B29D 22/00, B29C 70/82, B60K 15/03, B29C 49/54, B29C 51/34, B29L 9/00

(54) **METHOD FOR CONNECTING A TUBULAR PART MADE OF PLASTIC TO A NECK OF A FUEL TANK ALSO MADE OF PLASTIC**
VERFAHREN ZUR VERBINDUNG EINES AUS KUNSTSTOFF HERGESTELLTEN RÖHRENFÖRMIGEN TEILS MIT EINEM HALS EINES AUCH AUS KUNSTSTOFF HERGESTELLTEN KRAFTSTOFFTANKS
APPAREIL ET PROCÉDÉ POUR LA FABRICATION D'UNE PARTIE D'UN CADRE PAR SOUDAGE D'ÉLÉMENTS PROFILÉS EN MATIÈRE PLASTIQUE

(30) Priority: 15.12.2004 FR 0413309
(43) Date of publication of application: 26.09.2007
(73) Proprietor: Inergy Automotive Systems Research (Société Anonyme), 1120 Bruxelles (BE)
(72) Inventor: MABED, Barbara, B-1020 Brussels (BE); CRIEL, Bjorn, B-9820 Merelbeke (BE)
(74) Representative: Jacques, Philippe
(86) International application number: PCT/EP2005/056751
(87) International publication number: WO 2006/064005

(56) References cited:
- WO-A-00/10796
- WO-A-96/26380
- CH-A5- 611 571
- DE-A1- 2 246 858
- DE-A1- 4 444 097
- FR-A- 2 853 861
- GB-A- 2 349 928
- US-A1- 2003 168 853
- US-B1- 6 585 924
- PATENT ABSTRACTS OF JAPAN vol. 004, no. 094 (M-019), 8 July 1980 (1980-07-08) & JP 55 053530 A (TOPPAN PRINTING CO LTD), 19 April 1980 (1980-04-19)
- PATENT ABSTRACTS OF JAPAN vol. 015, no. 232 (M-1124), 13 June 1991 (1991-06-13) & JP 03 071824 A (DAINIPPON PLASTICS CO LTD), 27 March 1991 (1991-03-27)

## Description

The present invention relates to a method for connecting a tubular part made of plastic to a neck of a fuel tank also made of plastic, and to a fuel tank that can be obtained using such a method.

Fuel tanks onboard vehicles of various kinds generally have to meet imperviousness and permeability standards in relation to the type of use for which they are designed and the environmental requirements that they have to satisfy. Both in Europe and throughout the world we are currently experiencing a considerable tightening of the requirements concerned with limiting the emissions of pollutants into the atmosphere and into the environment in general. The design of fuel tanks is therefore evolving quickly towards techniques capable of better guaranteeing the imperviousness and safety under varying conditions of use. Furthermore, attempts are also being made to minimize the losses originating from the pipes and various accessories associated with the tanks. For example, the attachment of pipes and, in particular, of the filling pipe, to the tank may present permeability problems. With a view to reducing these problems, various solutions have been proposed most of which involve welding the said pipe to an intermediate part or neck which is preferably made in one piece with the tank.

Thus, patent application US 2003/0168853 discloses the fixing of a plastic pipe, particularly the filling pipe, to a fuel tank also made of plastic using an intermediate coupling bearing a resistive element (heating filament) which is inserted between the pipe and the aforementioned neck. In such a coupling system, three parts are fitted together and there are therefore two welding interfaces to control. Now, in a weld produced by a heating filament, the constancy of the distance between the various parts governs the success of the weld (where the pressure is exerted by expansion of the material) and so, in a three-part system, any tolerance-related defects combine with one another. Furthermore, when the two parts to be connected comprise a barrier layer, the disadvantage with this technique is that it enlarges the permeability path between the two barrier layers.

Application FR 2853861 discloses how to incorporate a heating filament directly into a functional component to be assembled with a tank pipe. However, that document is specific to tanks which have undergone a surface treatment (fluoration) and the assembly modes illustrated therein lead to not-insignificant leakage paths.

WO 9626380 A1 discloses a metal-plastic pipeline, produced by winding at least two perforated strips around a rotating former, joining the two strips, and subsequently pouring on a polymer material. Each or only one of the perforated strips is provided with projections facing into the gap between the strips. The perforated strips are joined by welding through the projections or strip edges along a spiral. Once the finished pipe has cooled down, it is cut into sections of equal length and the ends are machined by milling the outer polymer layer to produce a conical profile onto which the coupling sleeve can fit; the latter consists of a perforated metal casing encased in a block of polymer material and heating elements. Alternatively, adapter elements are joined to the ends, or connecting flanges are fitted, comprising polymer tubes or adapters for a coupling sleeve which is provided with a thrust collar and encased in a block of polymer material. The reinforcing casing of the connecting elements has the same strength as the reinforcing casing of the connected pipes.

WO 0010796 A1 discloses a method of forming a fusion joint between a plastics pipe and a heat fusion fitting, wherein the fitting comprises a hollow, tubular body of outer diameter of substantially the same as the outer diameter of the pipe and inner diameter greater than the inner diameter of the pipe, the tubular body having an inner wall comprising a fusible thermoplastic polymeric material, and a heating element wholly or partly embedded in the inner wall of the tubular body, which comprises: preparing the pipe end by removing a section of the outer wall of the pipe along a length thereof adjacent the pipe end, sufficient to accommodate the fitting, inserting the prepared pipe end into the fitting, and, energising the heating element so as to fuse the thermoplastic polymeric material and form a fusion joint between the pipe and the fitting.

The present invention aims to solve these problems by proposing an assembly method that can be used for parts with a barrier layer, which dispenses with an intermediate coupling (by winding the resistive element directly around one of the parts that are to be connected) and which leads to an assembly that has a shorter leakage path.

To this end, the present invention defines a method for connecting a tubular part made of plastic to a neck of a fuel tank also made of plastic, by welding using a resistive element capable of being heated by a resistive effect, in accordance with claim 1.

The term "fuel tank" is intended to denote a sealed hollow body able to store fuel under diverse and varying environmental and usage conditions. An example of this tank is a tank fitted to motor vehicles.

In the method according to the invention, the fuel tank is made of plastic.

The term "plastic" is intended to denote any material comprising at least one synthetic resin polymer.

All types of plastic may be suitable. Particularly suitable plastics come from the thermoplastics category.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, nonlimitingly, random copolymers, linear block copolymers, other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials include those that exhibit polydispersion in their molecular weight.

In particular, polyolefins, thermoplastic polyesters, polyketones, polyamides and copolymers thereof may be used. A blend of polymers or copolymers may also be used, as may a blend of polymer materials with inorganic, organic and/or natural fillers such as, for example, but nonlimitingly, carbon, salts and other inorganic derivatives, natural fibres or polymeric fibres. It is also possible to use multilayer structures consisting of stacked layers bonded together comprising at least one of the polymers or copolymers described above.

One polymer which is often used is polyethylene. Excellent results have been obtained with high density polyethylene (HDPE) as the main component of the fuel tank.

According to the invention, this tank also comprises at least one layer of a material that forms a barrier to liquids and/or gases. As a preference, the nature and thickness of the barrier layer are chosen in such a way as to limit as far as possible the permeability of the liquids and gases in contact with the interior surface of the tank. The barrier layer may be metallic, polymeric or of any other barrier material. As a preference, this layer is a polymeric (resin) layer and most preferably, it is based on a barrier resin, that is to say on a resin impermeable to the fuel, such as EVOH for example (a copolymer of ethylene and partially hydrolysed vinyl acetate). Alternatively, as another preferred embodiment, this layer may be based on a regular resin (non barrier resin like HDPE for instance) containing an additive imparting barrier properties to said resin. An example of such additive are particles (like clay for instance) of nanometric size.

Accordingly, in a preferred embodiment of the present invention, the plastic comprises HDPE (high density polyethylene) and the barrier layer is based on EVOH or on a HDPE nano-composition i.e a composition based on HDPE and comprising an additive of nanometric size.

The tank to which the method according to the invention applies may be produced in any known way, for example by thermoforming or blow moulding. Usually, the tank is produced by blow moulding of a parison or by thermoforming of two sheets. In the case a nanocompositon is used as barrier layer, co-injection may also be used.

A "parison" is to be understood as meaning a preform, generally extruded, which is intended to form the walls of the tank after it has been blown to the required shape and size. This preform need not necessarily be made as a single piece, as in "conventional" blow-moulding methods which use an extruded tubular parison. Thus, advantageously, the parison is in fact made up of two separate parts, which may be two sheets for example. However, as a particular preference, these parts result from the cutting of one and the same extruded tubular parison as described in application EP 1110697 in the name of the Applicant Company. According to this variant, once a single parison has been extruded, this parison is cut along its entire length, along two diametrically opposed lines, to obtain two separate parts (sheets). By comparison with the moulding of two separately extruded sheets, the thickness of which is constant, this approach makes it possible to use parisons of varying thickness (that is to say in which the thickness is not constant along their length), obtained using a suitable extrusion device (generally an extruder fitted with a die the position of the punch of which can be adjusted). Such a parison takes account of the reduction in thickness that occurs during the blowing operation at certain points on the parison as a result of the non-constant rate at which the material deforms in the mould.

In the context of the invention, the term "neck" is in fact intended to denote any part of substantially tubular shape which is either integrated directly into the tank (preferably integrally moulded with it) or attached (fixed) to the latter. In the 1st instance (integrated part) it is generally a relatively short part of the coupling type. In the second instance (attached part), it may be a longer part, such as the filling pipe for example.

For preference, in the 1 st instance, whatever the moulding method used, the neck to which the pipe is connected is therefore produced as one piece with the tank when the latter is being manufactured. According to a particularly advantageous variant, the parison (in the case of blow-moulding) or the sheets (in the case of thermoforming) is/are locally deformed in order to mould this neck by compression. This deformation can easily be achieved using apparatus that will be described hereinbelow and which forms part of another application in the name of the Applicant Company.

This apparatus comprises a core and a mould, these two parts being equipped one of them with a concave counter form and the other with a moving element able to penetrate the counter form in order to mould a neck.

As a preference, these two elements have a shape and a size that are suited to compression moulding the neck and preventing the reduction in thickness at its end (which naturally has a tendency towards thinning under the effect of the flow of the material). Finally, in order to be able to apply local compression around the neck as the moving part is withdrawn, this is preferably secured to a support equipped with at least one spring. This support then advantageously has a shape, dimensions and a location that are such that as the moving part is withdrawn, the support is pushed against the parison, around the neck, by the said spring so as to maintain local compression in that region. The intensity and duration of this compression are dependent on the rating of the spring.

Advantageously, the neck of the tank according to this variant of the invention is a re-entrant neck (that is to say one which extends inside the volume of the tank, more or less at right angles to the wall of the tank in this region). The method described hereinbelow (in which the neck is compression moulded at the time of manufacture of the tank) is particularly suitable for manufacturing re-entrant necks. For preference, the re-entrant neck is substantially cylindrical and has an inlet cone, i.e. the transition between the surface of the tank and that of the cylindrical neck is rounded. As a preference, this rounded feature has a radius (defined as the radius of curvature of the surface joining the neck to the tank) of at least 5 mm, or even 10 mm. This radius does not, however, advantageously exceed 20 mm. It could be larger if there is space in the surrounding vehicle, because that improves impact resistance. The presence of such an inlet cone makes it easier to assemble the parts and limits the risk of stress raisers.

The tubular part that is to be connected to the neck may be any tubular part including a barrier layer. For preference, in the case of a neck of the "coupling" type it is the tank filling pipe which is generally a part of relatively complex geometry, moulded separately from the tank. Furthermore, when the neck is an attached part, the tubular part may for example consist of a head that fits over this part. Thus, the method according to the invention is, for example, suitable both for fixing the tank filling pipe to a coupling (neck) incorporated into the said tank, and for fixing the head of the pipe to the filling pipe. The present invention is therefore particularly suited to cases where either the neck or the tubular part is the tank filling pipe.

In order for it to be possible for these parts (neck and tubular part) to be welded directly to one another, it is important for them to be based on materials that are compatible at least in the molten state. As a quite particular preference, the neck and the tubular part are based on the same plastic.

The neck and the tubular part generally have a substantially cylindrical shape (right cylinders), at least in the region of their mutual connection. What that means is that their lateral surfaces are substantially cylindrical (with generatrices parallel to their axis), and not tapered. It may, however, prove advantageous to equip at least one portion of one surface of one of the two parts with a conical taper to facilitate assembly. It may also prove advantageous to equip the neck and/or the pipe with a special relief to make them easier to assemble (or to incorporate a functional component: see later).

According to the invention, welding is done by means of a resistive element (that is to say of an element which heats through a resistive effect when an electric current is passed through it, and heats up enough to melt the plastic and produce the weld) incorporated into at least one of the parts that are to be connected, in the region of the weld. Generally, this is a metal filament.

This metal filament is typically made of copper with a diameter ranging from 0.1 to 0.5 mm.

Alternatively, the resistive element may be a metallic part (of any shape), which is over moulded during the manufacture of the part(s), or applied on the surface of at least one part by deposition (surface treatment). It may also be a resin composition containing a conductive additive, which may for instance be added to the part(s) as an extra layer. This additive may also be of nanometric size.

In the case of a metal filament, its installation is generally done by machining a groove beforehand in the part and then, by heating the filament using an electric current to encourage it to set at least partially into the material. This insetting serves to hold the metal filament in place during the welding operation. The groove is preferably in the shape of a double helix to encourage the coupling of the two ends of the filament to an electric power source. The cross section of the metal filament and the spacing between the windings are dependent on the nature of the material and on the thickness of the parts to be welded (at the location of this weld). The depth of the groove is dependent on the cross section of the metal filament. It must not in any event adversely affect the barrier layer of the parts that are to be assembled.

The resistive element may be incorporated either into the neck or into the tubular part. The latter variant is preferred for various reasons. A resistive element could also be provided in both parts.

First of all, in the case of a metal filament, the aforementioned machining operation is easier to perform on this part than on the neck, especially when the neck is incorporated into the tank. To do this, all that is required for example is for the part to be positioned on a mandrel and rotated in contact with an appropriate cutter in order to machine the groove. This operation can then be directly followed by the winding (preferably in a double helix, that is to say first of all from top to bottom and then from bottom to top) of the heated filament onto the end of the part intended for connection.

Next, the fact of equipping the pipe with the resistive element and of inserting it appropriately into the neck makes it possible, through a suitable layout of the parts and of the resistive element, to incorporate a functional element into the connection between the neck and the tubular part at the time of welding. Given that the ends of the pipes connected to a tank often comprise a valve (usually a nonreturn valve), the functional element according to this variant of the invention is preferably a valve. When the tubular part is a filling pipe, this valve may be an ICV (Internal Check Valve). It may be of any type known to those skilled in the art and may (in order to perform its nonreturn function) include active elements such as a ball, a seal or a diaphragm of appropriate shape generally not based on the same material (it being possible for the ball to be made of metal, the seal of elastomer, etc).

The functional element according to this variant of the invention is preferably based on the same plastic as (or on a material compatible with) the parts that are to be assembled. Thus, it may be at least partially welded (either by the resistive element or using a separate weld) thereto. Whatever the material of which it is made, this element may also simply be inserted in at least one of the parts that are to be assembled. However it is integrated, care will preferably be taken to ensure that the functional element is not interposed between the two contact surfaces, because it is important not to enlarge the distance between the barrier layers in this region. This is because the functional elements are often (as far as their outer casing or covering is concerned at least) produced by injection moulding a single plastic and therefore do not generally have a barrier layer. Finally, the use of reliefs on the neck and/or the pipe (elbow, flange or circular part substantially perpendicular to these cylindrical parts) sometimes makes incorporating components easier. In the case of the neck, such a relief can easily be moulded using the abovementioned method (compression moulding of the neck).

According to the invention, the parts to be connected need to have a shape and size such that a surface of each of them can be brought up against a corresponding surface of the other part, this being in the welding region of course. The expression "brought up against" is to be understood as meaning located as close as possible to, give or take the manufacturing tolerances. To this end, one advantage in the case of a compression-moulded neck as described above is that its wall has a substantially constant thickness making it possible to obtain particularly homogenous and reproducible welds.

The parts concerned are generally at least part of the respectively interior and exterior (or vice versa) lateral surface of the two parts. In the preferred scenario where the neck is a re-entrant neck, it is part of the interior lateral surface thereof and part of the exterior lateral surface of the tubular part to be connected thereto. Quite obviously it is necessary for it to be possible for the two parts to be brought into contact and therefore for one of the parts to be able to be inserted inside the other. Hence, advantageously, it is contrived for the tolerances on the parts to be tight. To this end, the precise dimensions (particularly tight tolerances) of the neck moulded by the method according to the invention lend themselves particularly well to the use of this method of welding and make it possible to obtain a particularly homogenous weld reproducibly. For the same reason, steps should be taken to ensure that the resistive element does not protrude excessively from the lateral surface. Thus, for example, if it protrudes by the order of a few 10^{th} of an mm, the method according to the invention yields good results.

Once the parts have been brought into contact, the weld is produced by passing an electrical current of appropriate intensity through the resistive element.

The main welding parameters are the voltage, the current and the welding time applied, and the distance between the parts that are to be welded and, in particular, the constancy of this distance. This last parameter is of key importance because it governs the quality of the weld as mentioned hereinabove. For this reason it is preferable to manufacture parts with a tolerance of the order of 1/10^{th} of an mm on the diameter in order to be able to guarantee a good weld.

In the method according to the invention, the distance between the two barrier layers in the region of the weld is preferably at most 5 mm, or even at most 4 mm, and as a quite particular preference, at most 3 mm, this being in order to make the leakage path as narrow as possible.

For preference, the length of the weld (that is to say the average width of the welded "band" between cylindrical parts) is at least 10 mm, or even at least 15 mm and as a quite particular preference at least 20 mm, this being so as to maximize the length of the leakage path and ensure a strong weld.

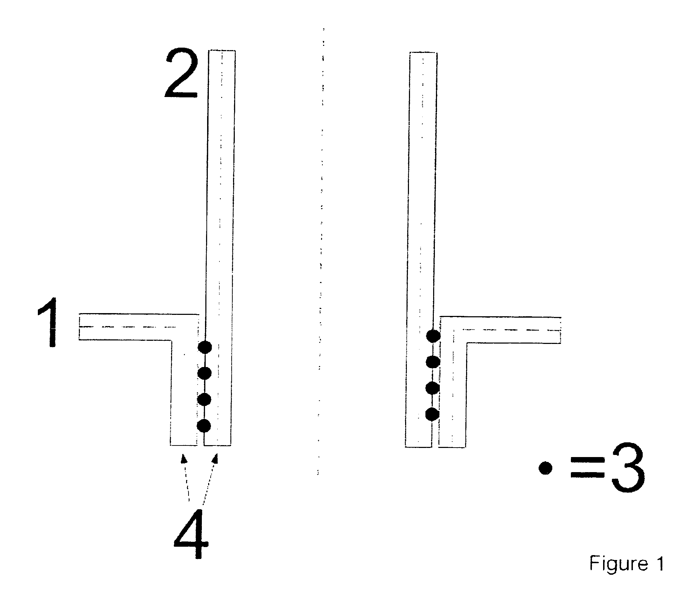

The present invention is illustrated nonlimitingly by Figures 1 to 6.

In each of these figures, identical numbers denote identical parts, namely :
1 = fuel tank equipped with a filling neck
2 = filling pipe
3 = heating filament
4 = barrier layer
5 = welding coupling
6 = ICV.

Figure 1 depicts the wall of a fuel tank (1) equipped with an integral neck to which a filling pipe (2) is connected by welding using a heating filament (3). The tank (1) and pipe (2) both comprise a barrier layer (4) and these two barrier layers are mutually parallel (coaxial) in the region of the weld. The distance between these two layers constitutes what is commonly known as the leakage path (or permeability path). It can be seen that this is short by comparison with what it would have been had a barner-layer-free intermediate connector been introduced between the two parts and also, by comparison with what it would have been had the parts for assembly not exhibited this coaxiality of barrier layers.

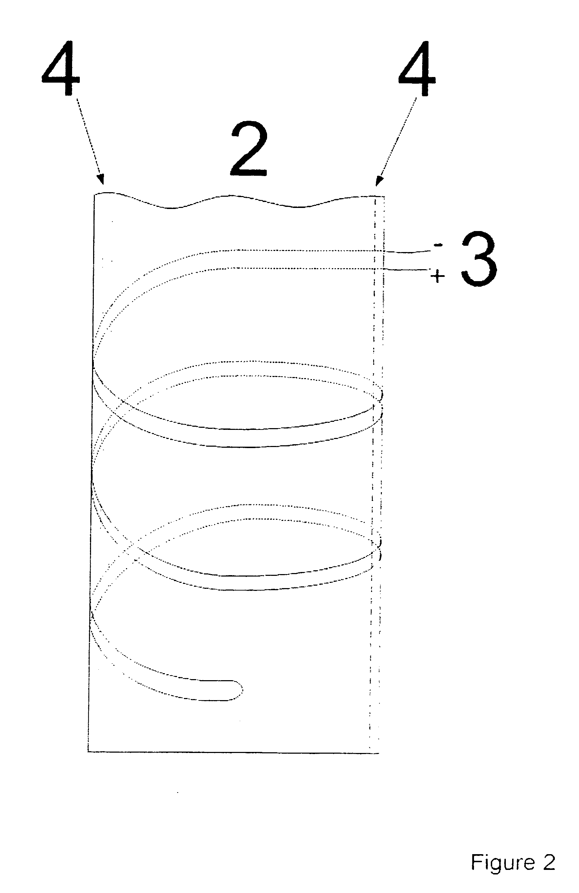

Figure 2 illustrates an example of the winding of the heating filament (3) onto the pipe (2). This is a double helix winding and it can be seen that the two ends of this double helix are close together, making it easy for them to be connected to a voltage source (depicted solely by the sign of its poles) and actually heat the filament through a resistive effect in order to produce the weld.

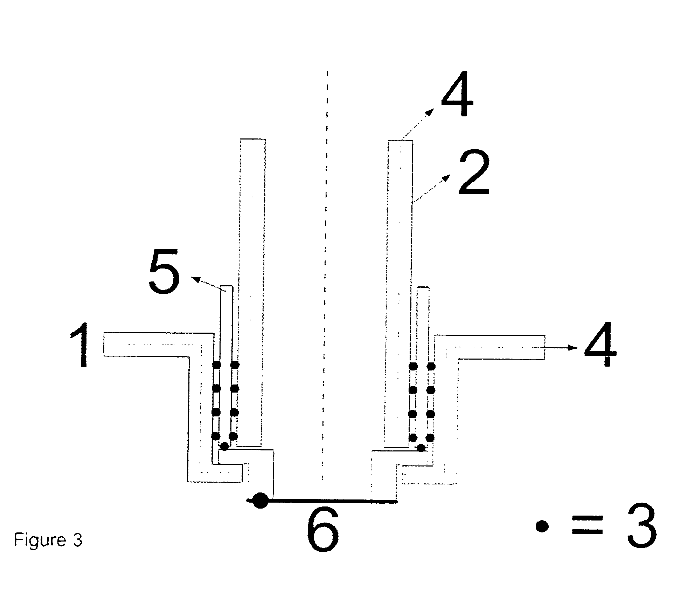

The assembly of the parts illustrated in Figure 3 is an assembly incorporating an ICV produced according to the prior art, as follows :
- the valve (6) is inserted into the neck of the tank (1)
- a welding coupling (5) comprising a heating filament (3) is inserted over the top
- the pipe (2) is inserted into the coupling (5)
- the parts (1), (2) and (6) are welded to the coupling (5) by passing an electric current through the heating filament (3).

In this type of assembly, the distance between the barrier layers (4) is enlarged as a result of the presence of the welding coupling, which has no barrier layer. A leakage path is therefore created here.

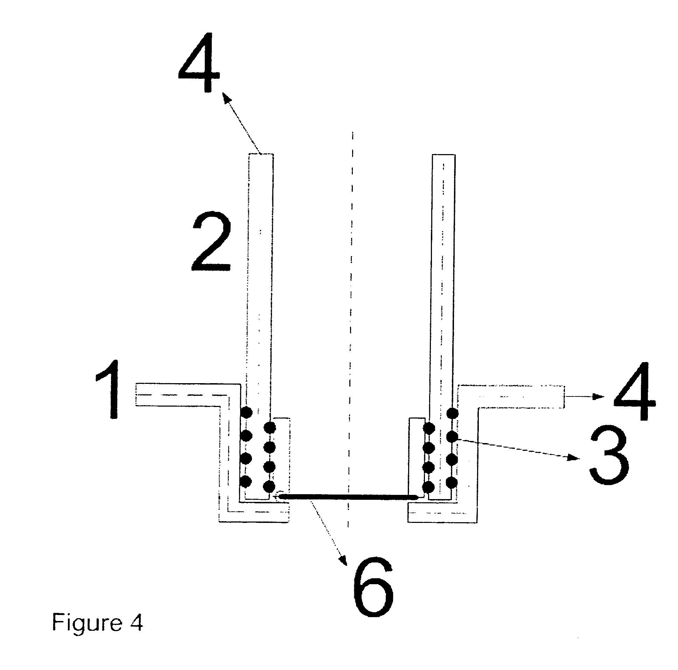

Figures 4 to 6 on the other hand illustrate assembly variants incorporating a valve according to the invention. The points that these variants have in common are the fact that the heating filament is incorporated into the filling pipe and the fact that the neck comprises a kind of internal flange (depicted as an elbow in the figures because these are sections parallel to the axis of the pipe (2)).

The parts illustrated in Figure 4 are assembled as follows :
- a pipe (2) equipped with a heating element (3) is inserted into the neck of the tank (1)
- the valve (6) is inserted into the pipe (2)
- the parts (1), (2) and (6) are welded by passing an electric current through the heating filament (3).

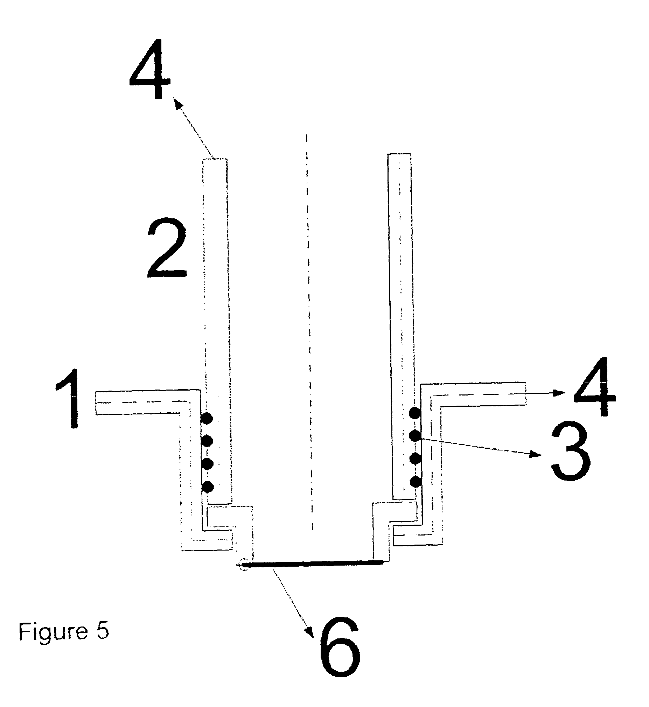

The parts illustrated in Figure 5 are assembled as follows :
- a valve (6) with a flange (elbow in the figure) is inserted into the neck of the tank (1)
- a pipe (2) equipped with a heating element (3) is inserted into the neck of the tank (1) also, over the top of the valve (6)
- the parts (1), (2) and (6) are welded by passing an electric current through the heating filament (3).

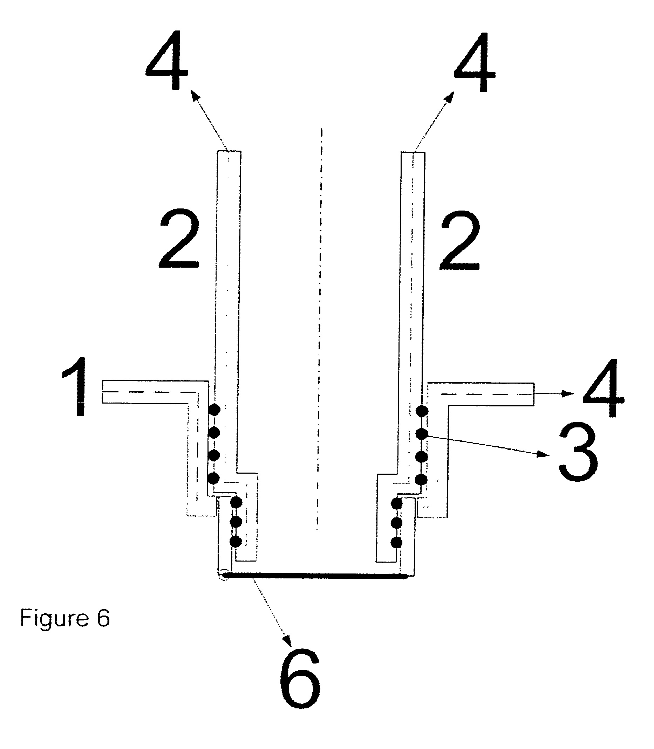

The parts illustrated in Figure 6 are assembled as follows :
- the valve (6) is arranged around the bottom of an elbowed pipe (2) equipped with a heating element (3);
- the pipe (2) is inserted into the neck of the tank (1) in such a way as to leave a certain length thereof equipped with the heating filament (3) (the bit following the elbow) protruding therefrom;
- the parts (1), (2) and (6) are welded by passing an electric current through the heating filament (3).

## Claims

1. Method for connecting a tubular first part (2) made of plastic to a second part (1) also made of plastic, by welding using a resistive element (3) capable of being heated by a resistive effect, wherein:
• the shape and the dimensions of the two parts (1, 2) to be connected are chosen in such a way that one surface of each of them is brought up against a corresponding surface of the other part;
• the resistive element (3) is incorporated into one of the two surfaces;
• the two surfaces are brought into contact;
• an electric current is passed through the resistive element (3) at an intensity such that it allows it to be heated to a temperature high enough to melt the plastic of which the two surfaces are made and weld them together,
**characterized in that** the second part (1) is a neck of a fuel tank, **in that** the tubular first part (2) and the second part (1) each comprise a barrier layer (4), the barrier layer (4) being one of a metallic layer, a layer based on a resin impermeable to fuel, and a layer based on a regular resin containing an additive imparting impermeability to fuel, **and in that** the tubular first part (2) and the second part (1) are welded in such a way that the two contact surfaces are coaxial and that the barrier layers (4) in this region are parallel.

2. Method according to the preceding claim, **characterized in that** the plastic comprises HDPE and **in that** the barrier layer (4) is based on EVOH or on a HDPE nano -composition i.e a composition based on HDPE and comprising an additive of nanometric size.

3. Method according to either one of the preceding claims, **characterized in that** the neck (1) is moulded as a single piece with the tank at the time of manufacture of the latter by blow moulding of a parison or thermoforming of two sheets in apparatus comprising a core and a mould, these two parts being equipped, one of them with a concave counter form and the other with a moving element able to penetrate the counter form in order to mould the neck (1).

4. Method according to any one of the preceding claims, **characterized in that** the neck (1) is re-entrant, substantially cylindrical and comprises an inlet cone.

5. Method according to any one of the preceding claims, **characterized in that** the tubular first part (2) or the neck (1) is a tank filling pipe.

6. Method according to any one of the preceding claims, **characterized in that** the contact surfaces are substantially in the form of right cylinders.

7. Method according to any one of the preceding claims, **characterized in that** the resistive element (3) is a metal filament incorporated into the tubular first part (2) or into the neck (1) by machining a groove beforehand in the tubular first part (2) or the neck (1) and then, by heating the filament (3) using an electric current, and by setting the hot filament (3) into the neck (1).

8. Method according to the preceding claim, **characterized in that** the groove has the shape of a double helix.

9. Method according to any one of claims 1 to 6, **characterized in that** the resistive element (3) is a metallic part or a resin composition containing a conductive additive.

10. Method according to the preceding claim, **characterized in that,** during welding, the tubular first part (2) is inserted into the neck (1) and **in that** a functional element (6) is incorporated into the connection between the neck (1) and the tubular first part (2).

11. Method according to the preceding claim, **characterized in that** the functional element (6) is a valve.

12. Method according to any one of the preceding claims, **characterized in that** the barrier layers (4) in the region of the weld are at most 5 mm apart.

13. Method according to any one of the preceding claims, **characterized in that** the weld has a minimum length of 10 mm.

## Patentansprüche

1. Verfahren zur Verbindung eines aus Kunststoff hergestellten röhrenförmigen ersten Teils (2) mit einem auch aus Kunststoff hergestellten zweiten Teil (1) durch Schweißen unter Verwendung eines Widerstandselements (3), das fähig ist, durch eine Widerstandswirkung erhitzt zu werden, wobei
- die Form und die Abmessungen der beiden Teile (1, 2), die verbunden werden sollen, auf eine solche Weise gewählt werden, dass eine Fläche eines jeden davon an eine entsprechende Fläche des anderen Teils gebracht wird;
- das Widerstandselement (3) in eine der beiden Flächen aufgenommen wird;
- die beiden Flächen miteinander in Kontakt gebracht werden;
- ein elektrischer Strom mit einer derartigen Stärke durch das Widerstandselement (3) geführt wird, die gestattet, dass es auf eine Temperatur erhitzt wird, welche hoch genug ist, um den Kunststoff, aus dem die beiden Flächen bestehen, zu schmelzen und diese aneinander zu schweißen,
**dadurch gekennzeichnet, dass** der zweite Teil (1) ein Hals eines Kraftstofftanks ist, dass der röhrenförmige erste Teil (2) und der zweite Teil (1) jeweils eine Sperrschicht (4) umfassen, die Sperrschicht (4) eines aus einer Metallschicht, einer auf einem für Kraftstoff undurchdringlichen Harz beruhenden Schicht, und einer auf einem gewöhnlichen Harz, das einen Zusatzstoff enthält, der Kraftstoffundurchlässigkeit verleiht, beruhenden Schicht ist, und dass der röhrenförmige erste Teil (2) und der zweite Teil (1) auf eine solche Weise geschweißt werden, dass die beiden Kontaktflächen koaxial sind, und dass die Sperrschichten (4) in diesem Bereich parallel sind.

2. Verfahren nach dem vorhergehenden Anspruch, **dadurch gekennzeichnet, dass** der Kunststoff HDPE umfasst, und dass die Sperrschicht (4) auf EVOH oder auf einer HDPE-Nanozusammensetzung, d.h. einer auf HDPE beruhenden und einen Zusatz von nanometrischer Größe umfassenden Zusammensetzung, beruht.

3. Verfahren nach einem der vorhergehenden Ansprüche, **dadurch gekennzeichnet, dass** der Hals (1) durch Blasformen eines Vorformlings oder durch Thermoformen von zwei Platten in einer Vorrichtung, die einen Kern und ein Formwerkzeug umfasst, wobei einer dieser beiden Teile mit einer konkaven Gegenform und der andere mit einem beweglichen Element, das fähig ist, in die Gegenform einzudringen, um den Hals (1) zu formen, versehen ist, zur Zeit der Herstellung des Tanks einstückig mit diesem geformt wird.

4. Verfahren nach einem der vorhergehenden Ansprüche, **dadurch gekennzeichnet, dass** der Hals (1) hinterschnitten ist, im Wesentlichen zylinderförmig ist, und einen Einlaufkonus umfasst.

5. Verfahren nach einem der vorhergehenden Ansprüche, **dadurch gekennzeichnet, dass** der röhrenförmige erste Teil (2) oder der Hals (1) ein Tankfüllrohr ist.

6. Verfahren nach einem der vorhergehenden Ansprüche, **dadurch gekennzeichnet, dass** die Kontaktflächen im Wesentlichen die Form von geraden Zylindern aufweisen.

7. Verfahren nach einem der vorhergehenden Ansprüche, **dadurch gekennzeichnet, dass** das Widerstandselement (3) eine Metallfaser ist, die durch zuvor erfolgendes Ausarbeiten einer Auskehlung im röhrenförmigen ersten Teil (2) oder im Hals (1) und dann Erhitzen der Faser (3) unter Verwendung eines elektrischen Stroms und durch Setzen der heißen Faser (3) in den Hals (1) in den röhrenförmigen ersten Teil (2) oder in den Hals (1) aufgenommen wird.

8. Verfahren nach dem vorhergehenden Anspruch, **dadurch gekennzeichnet, dass** die Auskehlung die Form einer Doppelspirale aufweist.

9. Verfahren nach einem der Ansprüche 1 bis 6, **dadurch gekennzeichnet, dass** es sich beim Widerstandselement (3) um einen Metallteil oder eine Harzzusammensetzung, die einen leitfähigen Zusatz enthält, handelt.

10. Verfahren nach dem vorhergehenden Anspruch, **dadurch gekennzeichnet, dass** während des Schweißens der röhrenförmige erste Teil (2) in den Hals (1) eingesetzt wird, und dass ein funktionales Element (6) in die Verbindung zwischen dem Hals (1) und dem röhrenförmigen ersten Teil (2) aufgenommen wird.

11. Verfahren nach dem vorhergehenden Anspruch, **dadurch gekennzeichnet, dass** das funktionale Element (6) ein Ventil ist.

12. Verfahren nach einem der vorhergehenden Ansprüche, **dadurch gekennzeichnet, dass** die Sperrschichten (4) im Bereich der Schweißung höchstens 5 mm voneinander getrennt sind.

13. Verfahren nach einem der vorhergehenden Ansprüche, **dadurch gekennzeichnet, dass** die Schweißung eine Mindestlänge von 10 mm aufweist.

## Revendications

1. - Procédé pour la connexion d'une première pièce tubulaire (2) en matière plastique à une deuxième pièce (1) également en matière plastique, par soudure au moyen d'un élément résistif (3) susceptible d'être chauffé par effet Joule, dans lequel :
■ on choisit la forme et les dimensions des deux pièces (1, 2) à connecter de manière à ce qu'une surface de chacune d'elle soit accolée à une surface correspondante de l'autre pièce ;
■ on intègre l'élément résistif (3) à une des 2 surfaces ;
■ on met les 2 surfaces en contact ;
■ on fait passer un courant électrique dans l'élément résistif (3) avec une amplitude telle qu'il permet de le chauffer à une température suffisante pour fondre la matière plastique constitutive des deux surfaces et de réaliser leur soudure,
**caractérisé en ce que** la seconde pièce (1) est une goulotte d'un réservoir à carburant, **en ce que** la première pièce tubulaire (2) et la seconde pièce (1) comprennent chacune une couche barrière (4) choisie parmi une couche métallique, une couche à base d'une résine imperméable au carburant et une couche d'une résine de base contenant un additif lui conférant une imperméabilité au carburant, et **en ce que** la première pièce tubulaire (2) et la seconde pièce (1) sont soudées de manière à ce que les 2 surfaces de contact soient coaxiales et que les que les couches barrières (4) dans cette zone soient parallèles.

2. - Procédé selon la revendication précédente, **caractérisé en ce que** la matière plastique comprend du PEHD et que la couche barrière comprend de l'EVOH ou une composition nanométrique à base de HDPE c.à.d. une composition à base de HDPE comprenant un additif de taille nanométrique.

3. - Procédé selon l'une quelconque des revendications précédentes, **caractérisé en ce que** la goulotte (1) est moulée d'une pièce avec le réservoir lors de la fabrication de ce dernier par soufflage d'une paraison ou thermoformage de deux feuilles dans un appareillage comprenant un noyau et un moule, ces deux pièces étant l'une munie d'une contre forme concave et l'autre, d'un élément mobile apte à pénétrer dans la contre forme pour mouler la goulotte (1).

4. - Procédé selon l'une quelconque des revendications précédentes, **caractérisé en ce que** la goulotte (1) est rentrante, substantiellement cylindrique et comporte un cône d'entrée.

5. - Procédé selon l'une quelconque des revendications précédentes, **caractérisé en ce que** la première pièce tubulaire (2) ou la goulotte (1) est une tubulure de remplissage du réservoir.

6. - Procédé selon l'une quelconque des revendications précédentes, **caractérisé en ce que** les surfaces de contact ont substantiellement la forme de cylindres rectilignes.

7. - Procédé selon l'une quelconque des revendications précédentes, **caractérisé en ce que** l'élément résistif (3) est un filament métallique intégré à la première pièce tubulaire (2) ou à la goulotte (1) par usinage préalable d'une gorge dans la première pièce tubulaire (2) ou la goulotte (1) et ensuite, par chauffage du filament (3) au moyen d'un courant électrique et par encastrement du filament chaud (3) dans la goulotte (1).

8. - Procédé selon la revendication précédente, **caractérisé en ce que** la gorge a la forme d'une double hélice.

9. - Procédé selon l'une quelconque des revendications précédentes, **caractérisé en ce que** l'élément résistif (3) est une pièce métallique ou une composition de résine comprenant un additif conducteur.

10. - Procédé selon la revendication précédente, **caractérisé en ce que** lors de la soudure, la première pièce tubulaire (2) est insérée dans la goulotte (1) et qu'un élément fonctionnel (6) est intégré à la connexion entre la goulotte (1) et la première pièce tubulaire (2).

11. - Procédé selon la revendication précédente, **caractérisé en ce que** l'élément fonctionnel (6) est un clapet.

12. - Procédé selon l'une quelconque des revendications précédentes, **caractérisé en ce que** les couches barrières (4) dans la zone de soudure sont distantes de 5 mm au plus.

13. - Procédé selon l'une quelconque des revendications précédentes, **caractérisé en ce que** la soudure a une longueur minimale de 10 mm.
